# EUROPEAN PATENT APPLICATION

(11) **EP 2 701 058 A1**
(43) Date of publication of application: **26.02.2014**
(21) Application number: 12181519.5
(22) Date of filing: 23.08.2012
(51) Int. Cl.: G06F 3/12

(54) **Method for configuring a reproduction device on a computing device, computer program product therefor, data carrier comprising such a computer program product, and computing device**

(71) Applicant: Océ-Technologies B.V., 5914 CA Venlo (NL)
(72) Inventor: The designation of the inventor has not yet been filed
(74) Representative: Groen, Mark Jacobus

(57) **Abstract**

Method for configuring a reproduction device on a computing device comprising communication means for communicating with the reproduction device, and at least one of a storage for storing a list comprising at least one identification of a reproduction device, and storage communication means for connecting to such a storage, the method comprising the steps of: performing a reproduction device discovery procedure by means of the communication means; retrieving from the storage a list of identifications of reproduction devices; displaying on display means, for each reproduction device discovered through the reproduction device discovery procedure and each reproduction device for which an identification is stored in the storage, a representation representing the respective reproduction device; receiving through input means a selection of a displayed reproduction device; and configuring the computing device for printing to the selected reproduction device.

## Description

The present invention relates to a method for configuring a reproduction device on a computing device.

The present invention further relates to a computer program product that, when executed on a processor, performs such a method.

The present invention also relates to a data carrier comprising such a computer program product.

Furthermore, the present invention relates to a computing device comprising communication means for communicating with a reproduction device and display means for displaying a list of representations of reproduction devices.

Computing technology has come a long way: room-sized apparatuses during the post-war era, reaching out to the general public during the 80s and 90s with home computers and personal computers that fitted on ones desktop, moving to a portable form with laptops in the 90s, and since the millennium reaching pocketable sizes with PDAs, mobile phones and tablet computers. This development moved from large-sized immobile apparatuses to devices the majority of people are now taking with them every day. This increase of mobility also changed the communication these devices are involved in. In the early days computing devices were only connected more or less in a permanent way to peripherals that were usually in the same room or an adjacent room. With the advent of computer networks computing devices were mutually connected, usually through traditional telephone lines or leased lines. Modern mobile devices are provided with a number of wireless communication units, such as Wi-Fi, Bluetooth, Near Field Communication (NFC), and mobile telecommunications technology (GPRS, EDGE, UMTS, LTE).

At the one hand, this allows mobile devices to communicate with other devices that might be located anywhere in the world. At the other hand, due to various reasons, such as security or bandwidth efficiency, not all devices and all services are made available to every single device in the world. Furthermore, for some services it does not make much sense to make them available to the world, for example devices that are intended to have some physical interaction. A specific example is reproduction devices such as scanners, printers, and multifunctionals (including multiple functions usually scanning, printing, copying, and faxing). In most cases, it is not very useful to be able to connect to a scanner or printer that is located remotely. This also means that mobile devices will connect to different devices depending on where they are at the moment a service is needed.

For example, during daytime one may be at his or her office and in order to print a document, a printer located in the office is used. However, during the evening one might be at home and if one needs a printout that very same day, it is not much use to print to the same printer in the office. Instead, one wants to print to the printer located at home. Especially, if one also travels frequently, for example visiting affiliates, temporarily staying in hotels, at conferences, at airports, etc. a multitude of devices might serve the user of the mobile device.

Traditionally, using a reproduction device from a computing device requires one to "install" the reproduction device in the computing device. The installation involves installing a device driver that allows the computing device to communicate through the appropriate communication protocol, detecting the reproduction device from the computing device (originally through a physical point-to-point connection, nowadays through a wired or wireless network), and configuring the reproduction device for use. Although cumbersome and time-involving, this procedure is usually a one-time event. If one uses reproduction devices in only one or two locations (say at home and in the office), this is of limited discomfort. However, if one uses reproduction devices in many locations, every time one wants to use a new device, one has to go through this sequence again, and it quickly becomes a tedious ritual.

The present invention aims to overcome this obstacle. The object of the present invention is to provide a method to make reproduction devices in a new location easily accessible to users of a computing device.

Although the present invention is specifically advantageous to mobile computing devices such as laptops, tablet computers, PDAs, and mobile phones, it may be applied to computing devices in general.

This object is attained by a method for configuring a reproduction device on a computing device comprising communication means for communicating with the reproduction device, and at least one of a storage for storing a list comprising at least one identification of a reproduction device, and storage communication means for connecting to such a storage, the method comprising the steps of: performing a reproduction device discovery procedure by means of the communication means; retrieving from the storage a list of identifications of reproduction devices; displaying on display means, for each reproduction device discovered through the reproduction device discovery procedure and each reproduction device for which an identification is stored in the storage, a representation representing the respective reproduction device; receiving through input means a selection of a displayed reproduction device; and configuring the computing device for printing to the selected reproduction device.

One way the present invention may be practiced is as follows: A default reproduction device may be pre-set, although this is not required. If a default reproduction device is pre-set, it is determined through the communication means for communicating with the reproduction device, whether the default reproduction device can be detected. If it can, the document is reproduced using the default reproduction device. If the default reproduction device cannot be detected or instead the user wishes to use another reproduction device than the default reproduction device, the method according to the invention performs a reproduction device discovery procedure. The discovery procedure may be a passive procedure, for example listening to broadcasts from reproduction devices. The discovery procedure may also be an active procedure, for example polling all available communication means where a reproduction device might be expected to be connected to for the presence of such a reproduction device. The active procedure may also comprise broadcasting a request for reproduction devices to announce themselves. Furthermore, the discovery procedure may comprise inquiring with a directory service, such as an Active Directory Server or an LDAP server.

From the discovery procedure a list (possibly empty) of available reproduction devices is obtained. Additionally, the computing device loads a list of identifications of reproduction devices from a storage. This storage may be internal to the computing device, or may be remote. In the remote case, the computing device is connected to the storage through communication means and loads the list from the storage through the communication means. The communication means may be the same communication means as the communication means for communicating with the reproduction device, or may be separate communciation means. For example, the communication means for communicating with the reproduction device may be a Bluetooth transceiver for communicating through Bluetooth while the communication means for communicating with the storage may be a Wi-Fi transceiver for communicating through Wi-Fi. Alternatively, the communication means for communicating with the reproduction device and the communication means for connecting to the storage is one and the same Wi-Fi transceiver.

The list of reproduction devices obtained from the discovery procedure and the list obtained from the storage is combined into a single list. This list is displayed by display means. The display means may be a monitor connected to the computing device. Alternatively, the display means is a remote device connected through a network to the computing device.

The user of the computing device is presented with the list of reproduction devices, both devices he has used before (retrieved from the list stored in the storage) and devices that are available now. He or she selects the reproduction device that he wants to use. The selection is received through the input means. The input means may for example be a pointing device, a keyboard, speech-recognition, and a touch-enabled display.

After receiving the selection, the computing device configures the selected reproduction device. Configuring may comprise installing an appropriate driver, optionally preceded by downloading an appropriate driver. Configuring may further comprise determining an appropriate set of reproduction settings (for example: duplex scanning, duplex printing, scanning resolution, printing resolution, colour mode, etc.)

After the reproduction device is configured, the user may reproduce a document through the reproduction device from his computing device. In the case the reproduction device is a printer, the user can print a document from his computing device. In the case the reproduction device is a scanner, the user can scan a document from the scanner straight to his computing device.

The present invention simplifies the whole process of preparing the computing device for use with a new reproduction device by integrating the detection, installation, and configuration of new printers in the reproduction device selection process a user is to be presented with anyway when he is about to initiate a reproduction process. In a preferred embodiment, the user is not bothered with this procedure when he wants to use the default reproduction device and this reproduction device is actually detected. (Within the capabilities of the detection methods used, it is advantageous to give the detection of the default reproduction device priority over other reproduction device.) However, if there is no default reproduction device pre-set, or the default reproduction device is not detected, or the user decides to select another reproduction device than the default reproduction device, a method according to the present invention is used to show a list of reproduction device. The list may be dynamically built on the display while devices are being detected, the list being updated and growing every time a new reproduction device is detected. Preferably, the user is shown some feedback on the display to inform him the detection procedure is still running and newly reproduction devices might turn up additionally. The reproduction devices retrieved from the storage may be shown in the list right from the start.

According to another aspect of the invention a method is provided, further comprising the step of: after the selected reproduction device has been configured, storing an identification for the selected reproduction device in the storage. By storing devices that have been selected by the user in the storage, the device will immediately show up in the list the next time the user has to select a reproduction device for use.

According to a further aspect of the present invention, a method is provided, wherein configuring comprises configuring according to a default configuration. The default configuration comprises reproduction settings that are considered a common denominator for (almost) all reproduction devices available. For example, the default configuration specifies simplex printing, as both simplex printers and duplex printers can do simplex printing. Alternatively, for different types of reproduction devices different default configurations are used. For example, a default scanner configuration and a default printer configuration are provided, or a default black-and-white printer configuration and a default colour printer configuration.

According to another aspect of the invention a method is provided, wherein configuring comprises configuring according to a configuration determined to be according to a preferred configuration, but within the constraints determined by the capabilities of the selected reproduction device. The preferred configuration comprises preferred reproduction settings that might not necessarily be supported by any reproduction device. During configuration it is determined whether the reproduction device is capable of supporting the preferred setting. If this is the case, the setting is used in the configuration. Otherwise not, or a fallback setting is used. For example, the preferred configuration might set duplex printing. However, if it is determined that the selected reproduction device is not capable of duplex processing, the configuration falls back on simplex printing.

According to a further aspect the invention provides a method, wherein storing an identification for the selected reproduction device further comprises storing the configuration in the storage in association with the reproduction device identification of the selected reproduction device. Storing the configuration makes it possible to retrieve the configuration at a later moment, when the reproduction device is to be used again. Alternatively, the configurations are stored in another storage. However, it is preferred to store the identifications and the configurations in the same storage.

According to again a further aspect of the present invention a method is provided, further comprising the steps of: after selection of a reproduction device, checking whether a configuration for the selected reproduction device is stored in the storage, and if a configuration is stored for the selected reproduction device, loading the configuration from the storage; and wherein the configuring is performed according to the loaded configuration. By storing the configuration with the identification in the storage and automatically retrieving the configuration upon selection of a reproduction device, the configurations of the reproduction devices become persistent.

According to an advantageous aspect, the present invention provides a method, wherein each representation is marked to signal at least one of the conditions that: the respective reproduction device has been discovered during the reproduction device discovery procedure, and the respective reproduction device's identification is stored in the storage. The labelling allows the user to quickly distinguish between reproduction devices he or she has used before, reproduction devices that are available but have not been used before, and reproduction devices the user has used before, but are not available right now. Preferably, the reproduction devices are ordered showing previously configured and currently detected reproduction devices first, then currently detected but yet unconfigured reproduction devices, and last configured but undetected reproduction devices. If a default reproduction device is pre-set and it has been detected, it will be intuitive if it is listed as the very first reproduction device.

Alternatively, the reproduction devices that have been configured (were retrieved from the list in the storage) but that have not been detected, are hidden from the user as it is not possible to use these reproduction devices at that moment.

According to another aspect of the invention, a method is provided wherein the computing device is a mobile computing device. As mobile computer devices are likely to frequently change location and connect to different (wireless) networks, it is to be expected that mobile computing devices frequently need to connect to different reproduction devices. Therefore, especially mobile computing devices take advantage of the present invention. Examples of mobile computing devices are laptops, tablet computers, mobile phones, and PDAs.

The present invention provides a computer program product that, when executed on a processor, performs a method as described above.

In a further embodiment, the present invention provides a data carrier comprising such a computer program product.

In a preferred embodiment, the present invention provides a computing device comprising: communication means for communicating with a reproduction device; display means for displaying a list of representations of reproduction devices; at least one of: a storage for storing identifications of reproduction devices, and storage communication means for connecting to a storage for storing identifications of reproduction devices; a processor, the processor being arranged to display reproduction device selection means using the display means; wherein the communication means is arranged to perform a reproduction device discovery procedure, and the processor before displaying the reproduction device selection means: causes the communication means perform the reproduction device discovery procedure, loads the reproduction device identifications from the storage, and includes in the reproduction device selection means representations of the reproduction devices discovered during the reproduction device discovery procedure and the reproduction devices which identifications were loaded from the storage; and wherein the processor is further arranged to: receive a reproduction device selection, and configure the selected reproduction device.

The communication means for communicating with a reproduction device may be a network transceiver such as an Ethernet adapter, a Wi-Fi adapter, a token-ring adapter, and a fibre-optical adapter, or a modem, or an adapter for communication over a serial or parallel connection. The display means may comprise an internal display such as a built-in display device, or a touch-enabled display. Alternatively, the display means may be external to the computing device such as an external monitor. The storage may be internal to the computing device, preferably a persistent storage such as a hard disk or a flash memory, or may be external such as a file server, Network Attached Storage (NAS) or a cloud storage. Furthermore, the memory may be a memory card that is inserted in a memory card slot in the computing device. In case the storage is external and is accessible through a network, the communication means for connecting to the storage may be a network device such as the type as used for the communication means for communicating with the reproduction device. The communication means for connecting to the storage may even be the very same communication means as the communication means for communicating with the reproduction device. The input means may be a pointing device such as a mouse, or a keyboard, or a touch-enabled display.

In a further embodiment, the invention provides a computing device, wherein the processor is further arranged to store an identification for the selected reproduction device in the storage after the selected reproduction device has been configured,

In again a further embodiment a computer device is provided, wherein the processor is arranged to store the configuration of the selected reproduction device in the storage in association with the reproduction device identification when the processor stores the identification for the selected reproduction device.

Furthermore, the present invention provides a computer device, wherein the processor is arranged to check after reception of a reproduction device selection whether a configuration for the selected reproduction device is stored in the storage, and if a configuration is stored for the selected reproduction device, to load the configuration from the storage, and the configuring is performed according to the loaded configuration.

The present invention also provides a computer device, wherein each representation is marked to signal at least one of the conditions that: the respective reproduction device has been discovered during the reproduction device discovery procedure, and the respective reproduction device's identification is stored in the storage.

Further advantageous and embodiments of the invention will be provided below with reference to the drawings wherein:
Figure 1 shows a schematic overview of an embodiment of the present invention;
Figure 2 shows a system wherein the embodiment of figure 1 is deployed;
Figure 3 shows a user interface of the embodiment of figure 1;
Figure 4 shows a detail of a user interface of the embodiment of figure 1; and
Figure 5 shows a flow chart of a method according to the present invention.

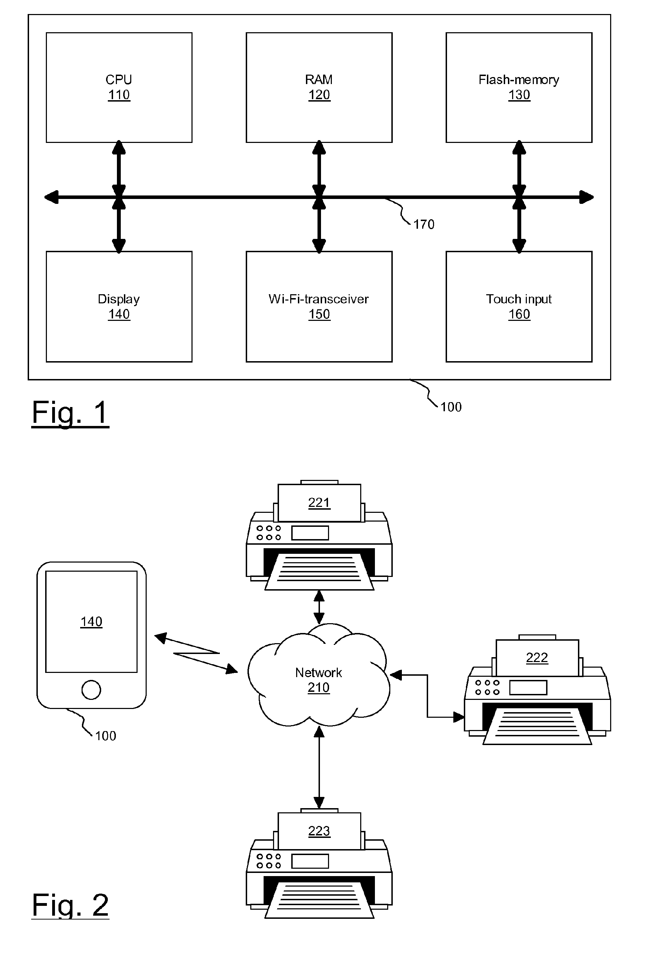

An embodiment according to the present invention may take the form of a tablet computer 100 (figure 1). The tablet computer 100 comprises a CPU 110 for controlling other components of the tablet computer 100, processing incoming data and generating data for outputting. Data that is being processed is temporary stored in Random Access Memory (RAM) 120. RAM 120 also temporary stores program code for executing the program code on CPU 110. As RAM 120 is volatile memory, its content will be gone when the RAM 120 is not powered. Program code and data are stored in a more permanent way in flash memory 130. Content in flash memory 130 will still be available after a period without power. The tablet computer 100 communicates with other devices through Wi-Fi-transceiver 150. Furthermore, the tablet computer 100 outputs information visually to a user through a display 140. The user communicates back to the tablet computer 100 by using the touch input 160 that allows the tablet computer 100 to detect what part of the display 140 the user is touching. The components of the tablet computer 100 are connected through a bi-directional databus 170. The tablet computer 100 comprises more components than the components shown here, such as Bluetooth radio, a sound chip with connected speakers, etc., but these components will not be mentioned for sake of brevity.

The tablet computer 100 uses its Wi-Fi transceiver 150 to communicate with other devices that are directly or indirectly connected to a network 210 (figure 2). The network 210 may be a single Wi-Fi network, or may be an aggregated network of interconnected networks, both wireless and wired. The other devices may for example be printers 221-223. The tablet computer 100 can print digital documents on any of the connected printers 221-223 through the network 210. To this purpose, the tablet computer 100 sends data representing the digital document through the network 210 to one of the printers 221-223. If any of the printers 221-223 is also capable of scanning documents, it may also be possible for this printer to send data through the network 210 to the tablet computer 100. Whether the tablet computer 100 is printing to a printer 221-223, or receiving a scanned document from a printer 221-223, usually the data between the tablet computer 100 and the printer 221-223 is bi-directional. For example, during printing, or even before printing status information on the printer 221-223 is sent to the tablet computer 100. The network 210 may further be used to open documents that are stored remotely, for example, documents stored in file servers or in cloud storage servers.

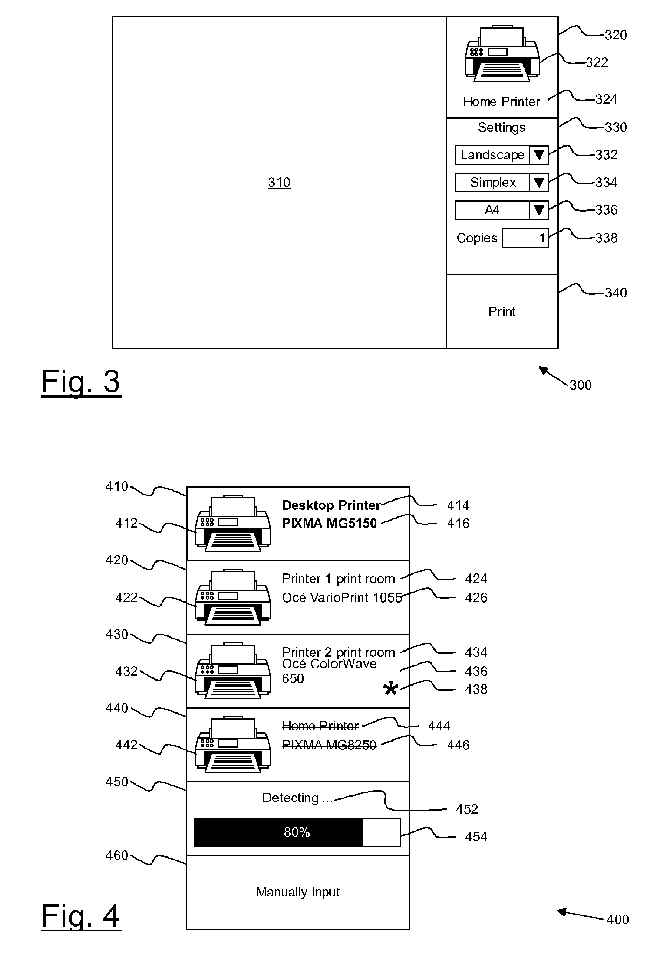

In order to use any of the printers 221-223, the tablet computer 100 shows a user interface 300 (figure 3). The user interface 300 comprises an area 310 where the document to be printed is displayed in order to allow the user to preview the document. The area 320 in the top right corner shows the selected printer by means of a printer icon 322 and the name 324 of the selected printer. A settings area 330 allows the user to configure the printer to use specific settings for processing the print job. For example, dropboxes 332, 334, and 336 allow the user to respectively set the paper orientation (landscape or portrait), usage of a duplex unit for printing either single sided or double sided (simplex or duplex printing), and the paper size (A4, A3, legal, letter, etc.). The user can further set the number of copies to print through the text box 338. By touching the print area 340, a print job is created and submitted to the printer, the job comprising data representing the document to be printed.

In the tablet computer 100, one particular printer has been pre-set as the default printer. When the user interface 300 is initially displayed, the tablet computer 100 starts communicating through the network 210 in order to check whether the default printer is available through the network 210. If it is, the default printer is shown in the printer area 320 by means of an icon 322 and the printer name 324. If no default printer is set, or the default printer appears not to be available, the tablet computer 100 starts a printer discovery procedure in order to detect all printers 221-223 available on the network 210. In order to signal to the user that printers are being detected, the printer icon 322 and the printer name 324 in printer area 320 are replaced by some animation suggesting to the user that the tablet computer 100 is trying to detect printers. When the user touches the printer area 320, a printer selection window 400 opens that allows the user to select a printer. While the window 400 is opening the tablet computer 100 loads a file in the flash memory 130 comprising a list of all the printers that have been configured in the past. If the printer discovery procedure is not running anymore (due to for example a time-out), the printer discovery is reinitiated. The printer selection window 400 will display all previously configured printers as loaded from the file in the flash memory 130. Furthermore, all printers detected through the printer discovery procedure are also displayed in the printer selection window 400. Each printer in the printer selection window 400 is represented through buttons 410, 420, 430, and 440 that provide the user with information on the printers. For each printer an icon 412, 422, 432, and 442 is shown, the printer name 414, 424, 434, and 444 is shown, and the printer type 416, 426, 436, and 446 are shown. If the printer discovery procedure is still running this is also shown to the user by an appropriate label 452 showing that printer detection is in progress, and a progress bar 454 or other suitable animation. Furthermore, a button 460 is provided to allow the user to manually enter printer information as a fall back for the situation that the desired printer cannot be automatically detected.

The printers in the printer selection window 400 are ordered as follows. On top the selected printer (if any) is shown. The button 410 has a more heavy border in order to show this is the selected printer. Directly beneath the currently selected printer, printers are shown (button 420) that have been previously configured (they were loaded from the list stored in the flash memory 130) and additionally have been detected during the printer discovery procedure. Next, printers are shown (button 430) that have been detected during the printer discovery procedure, but that have not been configured previously. The fact that these printers have not been configured before is shown to the user by the asterisk symbol 438. This way the user knows that this is a new (or at least previously undetected) printer. The last printers shown are printers that have been configured before (were loaded from the file stored in the flash memory 130), but that were not detected (yet) during the printer discovery procedure. These printers are labelled by having their name 444 and type 446 shown in strike-through typeface. Alternatively, their buttons 440 are shown dimmed or greyed-out. The default printer is labelled by having its name 414 and type 416 shown in a bold typeface. In this particular example, the selected printer (the top button 410) is also the default printer.

Alternatively, the printers that were loaded from the file in the flash-memory 130, but that were not detected are hidden from the user, as they will at that moment not be possible for the user to print to that device. Again alternatively, these printers are not hidden and these printers can be selected. However, as these printers have not been detected, it will not be possible to directly print to any of these printers. Instead, if one of these printers has been selected, the tablet computer 100 will allow the user to initiate printing by tapping the print button 340. However, the tablet computer 100 will not send the print job through the network 210, but instead will store the print job in the flash memory 130. If at a later time, the selected printer is detected, the print job stored in the flash memory 130 is still sent. This way printing is postponed. Of course when the user taps the print button 340, he will be shown a warning that the selected printer has not been detected, and the printing will be postponed.

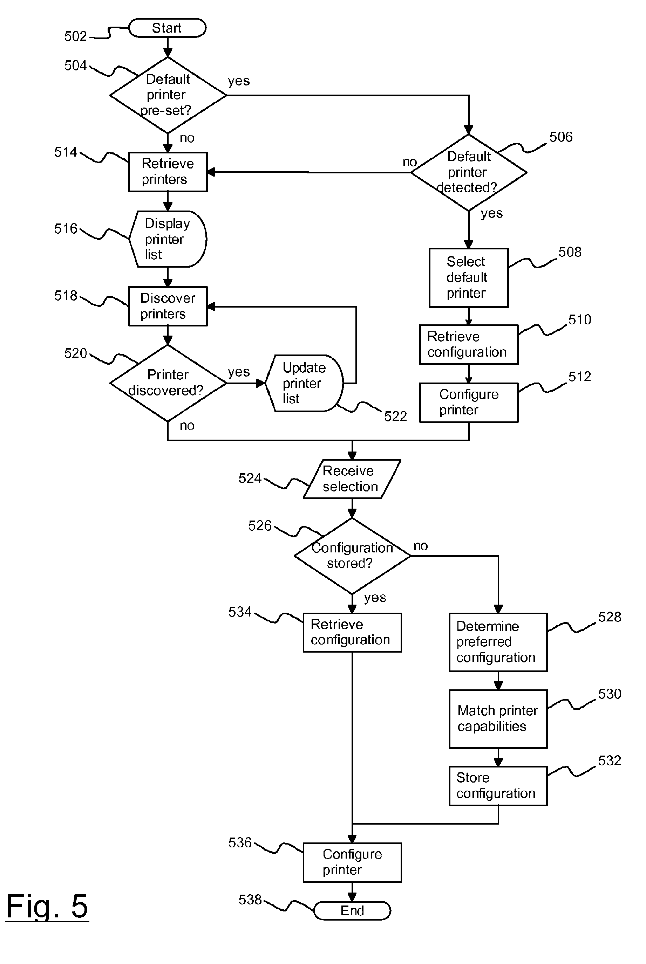

Figure 5 shows a flow chart for a method according to the present invention. The method starts 502 with determining 504 whether a default printer has been set. If that is the case, the tablet computer 100 will try to detect 506 the default printer. If the detection of the default printer is successful, the default printer is selected 508. Next, the tablet computer 100 loads the previously configured printers from the file in the flash storage 130 and retrieves 510 the stored configuration for the default printer. With the retrieved configuration the default printer is configured 512. This results in the default printer being selected and configured. If the user wants to select 524 another printer, he can use the procedure as shown further on.

If the detection 506 of the default printer fails, the method proceeds by loading 514 and displaying 516 the printers stored in the file in the flash memory 130 as will be described forthwith.

If no default printer is pre-set 504, or the detection 506 of the default printer failed, the tablet computer 100 retrieves from the flash memory 130 a list of previously configured printers. The previously configured printers are displayed 516 in order to allow the user to select one. In the meantime the printer discovery procedure 518 has been initiated. Preferably, the printer discovery procedure is started as soon as it becomes clear that the user wants to print a document. The printer discovery procedure may run in the background while the list of previously configured printers is being loaded from the flash memory 130. If printers are being detected 520 during the printer discovery, the list of printers being displayed to the user is updated 522 to reflect the detection. If the newly detected printer is not present in the list in flash memory 130 (this means, it has not been configured previously), the printer is added to the displayed list. If it was already in the list, the list is updated to show that the printer is no longer an undetected but previously configured printer, but instead a detected and previously configured printer. After the list has been updated 522, the printer discovery procedure continues 518. After some time no more additional printers are being discovered 520, a time-out occurs, and the only thing left is for the user to select 524 a printer.

Printer selection 524 is not limited till after the printer discovery procedure has finished. As soon as printers are in the list being displayed, the user may select 524 a printer. Furthermore, the user may also select a printer after the default printer has automatically been selected 508 and configured 512.

After the tablet computer 100 has received 524 the selection of the printer, it is checked 526 if a configuration for the printer is present in the file stored in the flash memory 130. If the printer has previously been configured, this should be the case. In that cae, the configuration is retrieved 534 and the selected printer is configured 536 accordingly. After the printer has been configured 536, the printer configuration method ends 538. However, if the printer was not previously configured, the configuration will not be present 526 in the file in the flash memory 130. In that case a preferred configuration is determined 528, for example a predetermined preferred configuration. The preferred configuration is compared 530 to the capabilities of the selected printer. If the selected printer is not able to fulfil some of the settings in the preferred configuration, the configuration is adapted by setting this setting to a less preferred value or a fall back value. Afterwards, the configuration is stored 532 in the file in the flash memory 130. This way, in a future session this printer will immediately show up in the printer selection window 400, and if it is selected again, the configuration is retrieved straight from the file in the flash memory 130.

After the configuration is stored 532, the printer is configured 536 and the configuration method according to the present invention ends 538. The selected printer is now ready to receive submissions of print jobs.

If the user changes printer settings in the settings area 330, the configuration is updated, and the file in the flash memory 130 is updated to in order to make the changes persistent.

It should be clear that the invention is not limited to the embodiments described above and shown in the drawings. To the person skilled in the art it will be clear that numerous modifications and adaptations of these embodiments fall within the scope of the present invention. For example, it will be clear to the person skilled in the art that features of the embodiments shown and described here may be combined in order to get further embodiments without departing from the scope of the invention. The scope of protection sought is only limited by the following claims.

## Claims

1. Method for configuring a reproduction device on a computing device comprising communication means for communicating with the reproduction device, and at least one of a storage for storing a list comprising at least one identification of a reproduction device, and storage communication means for connecting to such a storage, the method comprising the steps of:
performing a reproduction device discovery procedure by means of the communication means;
retrieving from the storage a list of identifications of reproduction devices;
displaying on display means, for each reproduction device discovered through the reproduction device discovery procedure and each reproduction device for which an identification is stored in the storage, a representation representing the respective reproduction device;
receiving through input means a selection of a displayed reproduction device; and
configuring the computing device for printing to the selected reproduction device.

2. Method according to claim 1, further comprising the step of:
after the selected reproduction device has been configured, storing an identification for the selected reproduction device in the storage.

3. Method according to claim 1 or 2, wherein configuring comprises configuring according to a default configuration.

4. Method according to claim 1 or 2, wherein configuring comprises configuring according to a configuration determined to be according to a preferred configuration, but within the constraints determined by the capabilities of the selected reproduction device.

5. Method according to claim 2, 3, or 4, wherein storing an identification for the selected reproduction device further comprises storing the configuration in the storage in association with the reproduction device identification of the selected reproduction device.

6. Method according to claim 5, further comprising the steps of: after selection of a reproduction device, checking whether a configuration for the selected reproduction device is stored in the storage, and if a configuration is stored for the selected reproduction device, loading the configuration from the storage; and wherein the configuring is performed according to the loaded configuration.

7. Method according to any of claims 1-6, wherein each representation is marked to signal at least one of the conditions that:
the respective reproduction device has been discovered during the reproduction device discovery procedure, and
the respective reproduction device's identification is stored in the storage.

8. Method according to any of claims 1-7 wherein the computing device is a mobile computing device.

9. Computer program product that, when executed on a processor, performs a method according to any of claims 1-8.

10. Data carrier comprising a computer program product according to claim 9.

11. Computing device comprising:
communication means for communicating with a reproduction device;
display means for displaying a list of representations of reproduction devices;
at least one of:
- a storage for storing identifications of reproduction devices, and
- storage communication means for connecting to a storage for storing identifications of reproduction devices;
a processor, the processor being arranged to display reproduction device selection means using the display means;
wherein the communication means is arranged to perform a reproduction device discovery procedure, and the processor before displaying the reproduction device selection means:
- causes the communication means perform the reproduction device discovery procedure,
- loads the reproduction device identifications from the storage, and
- includes in the reproduction device selection means representations of the reproduction devices discovered during the reproduction device discovery procedure and the reproduction devices which identifications were loaded from the storage; and
wherein the processor is further arranged to:
- receive a reproduction device selection, and
- configure the selected reproduction device.

12. Computing device according to claim 11, wherein the processor is further arranged to store an identification for the selected reproduction device in the storage after the selected reproduction device has been configured,

13. Computer device according to claim 12, wherein the processor is arranged to store the configuration of the selected reproduction device in the storage in association with the reproduction device identification when the processor stores the identification for the selected reproduction device.

14. Computer device according to claim 13, wherein the processor is arranged to check after reception of a reproduction device selection whether a configuration for the selected reproduction device is stored in the storage, and if a configuration is stored for the selected reproduction device, to load the configuration from the storage, and the configuring is performed according to the loaded configuration.

15. Computer device according to any of claim 11-14, wherein each representation is marked to signal at least one of the conditions that:
the respective reproduction device has been discovered during the reproduction device discovery procedure, and
the respective reproduction device's identification is stored in the storage.
